# EUROPÄISCHE PATENTANMELDUNG

(11) **EP 0 897 071 A2**
(43) Veröffentlichungstag der Anmeldung: **17.02.1999**
(21) Anmeldenummer: 98115171.5
(22) Anmeldetag: 12.08.1998
(51) Int. Cl.: F16D 55/224

(54) **Scheibenbremse**

(30) Priorität: 13.08.1997 DE 19735127
(71) Anmelder: SIEGERLAND-BREMSEN EMDE GMBH + CO., 35708 Haiger-Rodenbach (DE)
(72) Erfinder: Kring, Helmut, 35708 Haiger-Steinbach (DE)
(74) Vertreter: Klingseisen, Franz, Dipl.-Ing.

(57) **Zusammenfassung**

Bei einer Scheibenbremse mit zwei gegenüberliegenden, Bremsbacken (6) tragenden Bremshebeln (1,2), die an einem Ende verschwenkbar gelagert und am anderen Ende über eine Spindel (7) miteinander verbunden sind, die mit einem Ende am einen Bremshebel (2) und mit dem anderen Ende an einem Bügel (10) angelenkt ist, mit dem der andere Bremshebel (1) in einem Abstand von der Anlenkachse (9) der Spindel (7) gelenkig verbunden ist, wobei der Bügel (10) durch eine Betätigungseinrichtung (12,13) zum Öffnen und Schließen der Bremse verschwenkbar ist, wird zur Erhöhung der Bremskraft die Anlenkachse (9) der Spindel (7) am Bügel (10) auf der Außenseite der Gelenkachse (11) zwischen Bügel (10) und Bremshebel (1) angeordnet.

## Beschreibung

Die Erfindung betrifft eine Scheibenbremse nach dem Oberbegriff des Anspruchs 1.

Bei einer Scheibenbremse dieser Art ist es bekannt, die Anlenkachse der Spindel am Bügel zwischen den Gelenkachsen an den Bremshebelenden anzuordnen, wobei die Anlenkachse der Spindel unter der Verbindungslinie zwischen den Gelenkachsen an den Bremshebelenden liegt. Wenn zum Lüften der Bremsbacken der Bügel durch ein elektrohydraulisches Lüftgerät nach oben verschwenkt wird, wandert die Anlenkachse der Spindel um die Gelenkachse am nächstliegenden Bremshebel nach oben unter Vergrößerung des Abstandes zwischen den beiden Bremshebelenden.

Zum Schließen der Bremse wird der Bügel durch ein Federpaket nach unten in die horizontale Lage verschwenkt, wobei die Anlenkachse der Spindel unter Verkleinerung des Abstandes zwischen den Gelenkachsen an den Bremshebelenden nach Art eines Exzenters um die Gelenkachse des nächstliegenden Bremshebels verschwenkt wird. Das Federpaket greift dabei etwa in der Mitte zwischen den beiden Bremshebeln an einem seitlichen Ansatz des Bügels an.

Derartige Scheibenbremsen werden beispielsweise bei Krananlagen vorgesehen. Hierbei kommt es auf eine hohe Bremskraft an.

Der Erfindung liegt die Aufgabe zugrunde, eine Scheibenbremse der eingangs angegebenen Art so zu verbessern, daß mit einfachen Mitteln eine Erhöhung der Bremskraft erreicht wird.

Diese Aufgabe wird erfindungsgemäß durch die Merkmale im kennzeichnenden Teil des Anspruchs 1 gelöst. Dadurch, daß die Anlenkachse der Spindel auf der Außenseite der Gelenkachse zwischen Bremshebel und Bügel liegt, ergibt sich beim Schließen der Bremse ein günstiger Kraftangriff mit einem hohen Hebelverhältnis, so daß eine erheblich höhere Bremskraft als bei der bekannten Ausführungsform erreicht wird.

Die Erfindung wird beispielsweise anhand der Zeichnung näher erläutert. Es zeigen
- Fig. 1: einen Schnitt längs der Linie A - B in Fig. 2,
- Fig. 2: eine Seitenansicht der Scheibenbremse,
- Fig. 3: eine Fig. 1 entsprechende Ansicht der Bremshebelanordnung,
- Fig. 4: einen Querschnitt durch den Bügel längs der Linie C-D in Fig. 1, und
- Fig. 5: einen Querschnitt durch den Bügel an der Stelle der Federanlenkung.

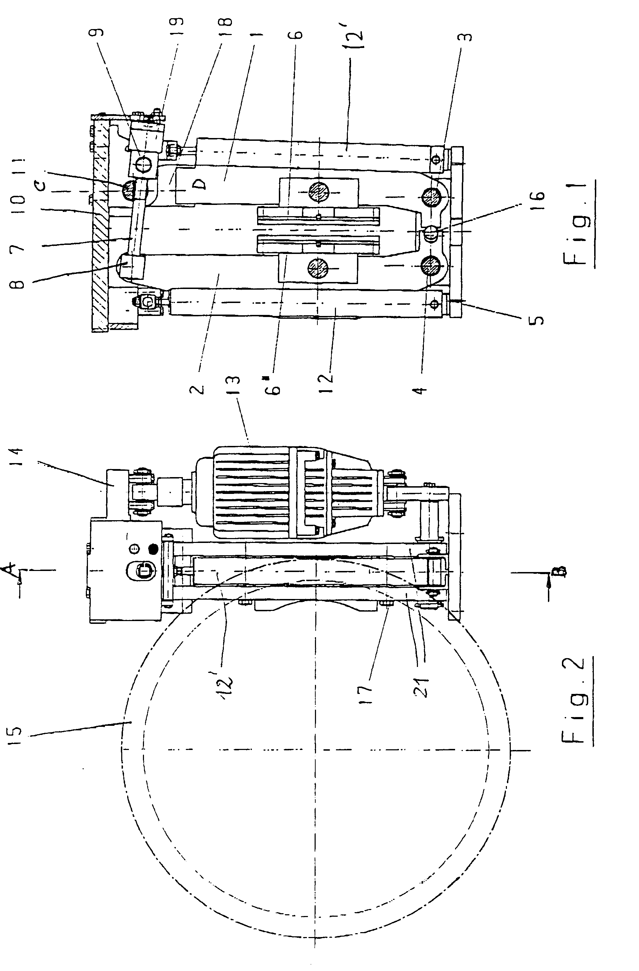

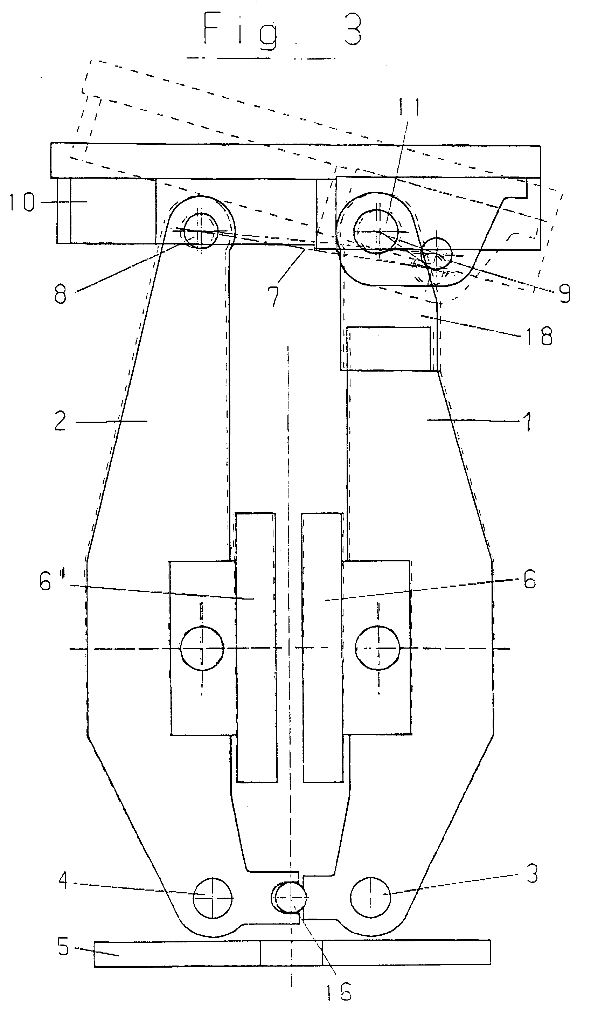

In Fig. 1 und 3 sind mit 1 und 2 einander gegenüberliegende Bremshebel bezeichnet, die mit den unteren Enden bei 3 bzw. 4 an einer Basis 5 angelenkt sind. Im Mittelbereich der beiden Bremshebel 1,2 ist über einen Gelenkzapfen jeweils eine Bremsbacke 6 bzw. 6' angelenkt. Der Bremshebel 2 ist am oberen Ende über einen Gelenkzapfen mit Gelenkachse 8 mit einer Spindel 7 verbunden, die über einen Gelenkzapfen mit Anlenkachse 9 mit einem Bügel 10 verbunden ist, an dem über einen Gelenkzapfen mit Gelenkachse 11 das obere Ende des Bremshebels 1 angelenkt ist.

Bei der Ausführungsform nach den Fig. 1 und 3 übergreift der Bügel 10 die beiden oberen Enden der Bremshebel 1,2, wobei am in Fig. 1 linken, freien Ende des Bügels 10 ein Federpaket 12 angreift, dessen anderes Ende mit der Basis 5 verbunden ist. Dieses Federpaket 12 wirkt in Schließrichtung der Bremse, d.h. der Bügel 10 wird durch das Federpaket 12 in die in Fig. 1 wiedergegebene Schließstellung nach unten gezogen. Auf der gegenüberliegenden Seite ist ein weiteres Federpaket 12' zwischen Basis 5 und Bügel 10 angeordnet, das ebenfalls in Schließrichtung wirkt und das rechte Ende des Bügels 10 nach oben drückt.

Wie Fig. 2 zeigt, ist an der Basis 5 ein elektrohydraulisches Gerät 13 angelenkt, das an einem seitlichen Ansatz 14 des Bügels 10 gelenkig angreift und mittels dem der Bügel 10 aus der dargestellten Schließstellung, in der die Bremsbacken 6, 6' an der in Fig. 2 angedeuteten Bremsscheibe 15 anliegen, in die Öffnungsstellung nach oben verschwenkt wird, in der die beiden oberen Enden der Bremshebel 1,2 voneinander weg bewegt werden. Die Anlenkachse 9 der Spindel 7 am Bügel 10 liegt in der Ansicht nach Fig. 1 und 3 in einem Abstand auf der Außenseite des Gelenkzapfens mit der Gelenkachse 11 zwischen Bremshebel 1 und Bügel 10. Wenn der Bügel 10 aus der in Fig. 1 wiedergegebenen Stellung im Uhrzeigersinn durch das elektrohydraulische Lüftgerät 13, das etwa an der Stelle der Gelenkachse 8 am Bügel 10 angreift, nach oben verschwenkt wird, wandert die Anlenkachse 9 der Spindel 7 relativ zur Gelenkachse 11 nach unten und innen, wobei über die Spindel 7 gleichzeitig der Abstand zwischen den Gelenkachsen 8 und 11 vergrößert wird, so daß sich die Bremsbacken 6,6' von der Bremsscheibe 15 lösen. Die Lüft- bzw. Offenstellung der Bremse ist in Fig. 3 durch gestrichelte Linien wiedergegeben. Durch Verschwenken des Bügels 10 in die Offenstellung wandert die Gelenkachse 11 zusammen mit der Anlenkachse 9 etwas nach außen, wie Fig. 3 zeigt, während gleichzeitig die Anlenkachse 9 nach unten und innen bewegt wird.

Bei einer praktischen Ausführungsform bildet die Verbindungslinie zwischen den Achsen 9 und 11 einen Winkel von etwa 4 bis 8° mit der Verbindungslinie zwischen den Gelenkachsen 8 und 11 in der in Fig. 1 wiedergegebenen Schließstellung der Bremse. Der horizontale Abstand zwischen den Achsen 9 und 11 kann bei etwa 60mm liegen.

Der Gelenkzapfen mit der Anlenkachse 9 wirkt bei dieser Anordnung relativ zum Gelenkzapfen mit der Achse 11 als Exzenter, wobei durch Verschwenken des Bügels 10 aus der Offenstellung nach unten in die Schließstellung der wirksame Hebel vergrößert wird. Hierdurch können erheblich höhere Bremskräfte angelegt werden als bei der bekannten Ausführungsform, bei der die Anlenkachse 9 auf der Innenseite der Gelenkachse 11, also innerhalb des Abstandes zwischen den Gelenkachsen 8 und 11 liegt. Bei der Anordnung nach den Fig. 1 und 3 ergibt sich beim Schließen der Bremse ein Hebelverhältnis von 1:30 bis 1:34, während sich beim öffnen ein Hebelverhältnis von etwa 1:16 ergibt. Insgesamt kann durch die beschriebene Anordnung die Bremskraft gegenüber der bekannten Bauform nahezu verdoppelt werden.

Beim Lösen der Bremsbacken 6,6' von der Bremsscheibe 15 wird zwar der wirksame Hebelarm mit fortschreitender Schwenkbewegung des Bügels 10 nach oben kleiner, hierauf kommt es aber beim Freigeben der Bremse nicht an.

Beim Anlegen der Bremsbacken an der Bremsscheibe werden die Bremshebel 1 und 2 nur über einen geringen Weg bewegt, beispielsweise jeweils um 0,337° um die unteren Anlenkstellen 3 und 4 nach innen verschwenkt. Hierbei wird der Bügel 10 aus der in Fig. 3 gestrichelten Offenstellung um etwa 15,5° nach unten in die horizontale Stellung verschwenkt, wobei zugleich die Gelenkachse 11 etwas nach innen wandert, wie durch ausgezogene Linien in Fig. 3 angegeben.

Die beiden Bremshebel 1 und 2 sind an den unteren Enden vorzugsweise über eine Drehkopplung 16 aneinander abgestützt, wobei am Bremshebel 1 ein Zylinder beispielsweise angeschweißt ist, der in eine Nut am gegenüberliegenden Bremshebel 2 eingreift. Diese Drehkopplung 16 gewährleistet beim Öffnen der Bremshebel einen gleichmäßigen Lüftspalt zwischen Bremsscheibe und Bremsbacken.

Wie die Seitenansicht in Fig. 2 zeigt, ist jeder Bremshebel durch zwei beabstandete, parallel verlaufende, plattenförmige Bremshebelteile 21 ausgebildet, die über Verbindungselemente 17 eine Einheit bilden.

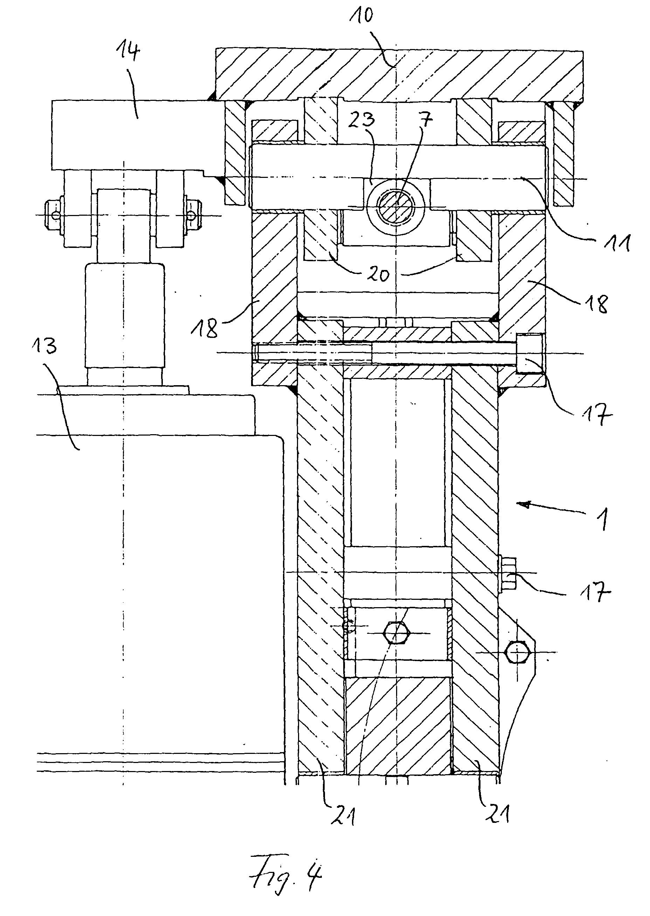

Fig. 4 zeigt einen Schnitt durch die gelenkige Verbindung zwischen Bremshebel 1 und Bügel 10, der mit zwei beabstandeten Laschen 20 versehen ist, in denen der Gelenkzapfen mit der Gelenkachse 11 befestigt ist. Auf den Außenseiten der beiden Bremshebelteile 21 des Bremshebels 1 sind Verlängerungsteile 18 angeschweißt, in denen die an den Laschen 20 nach außen vorstehenden Enden des Gelenkzapfens drehbar gelagert sind. Der Gelenkzapfen selbst ist, wie Fig. 4 zeigt, mit einer Ausnehmung 23 versehen, durch die die Spindel 7 verläuft, die in der Ansicht nach Fig. 1 durch den Querschnitt des Gelenkzapfens mit der Gelenkachse 11 verläuft.

An der Spindel 7 kann eine in Fig. 1 bei 19 dargestellte Gestängenachstellvorrichtung angebracht sein, die bei Verschleiß des Bremsbelages der Bremsbacken automatisch den vorgegebenen Lüftspalt nachjustiert.

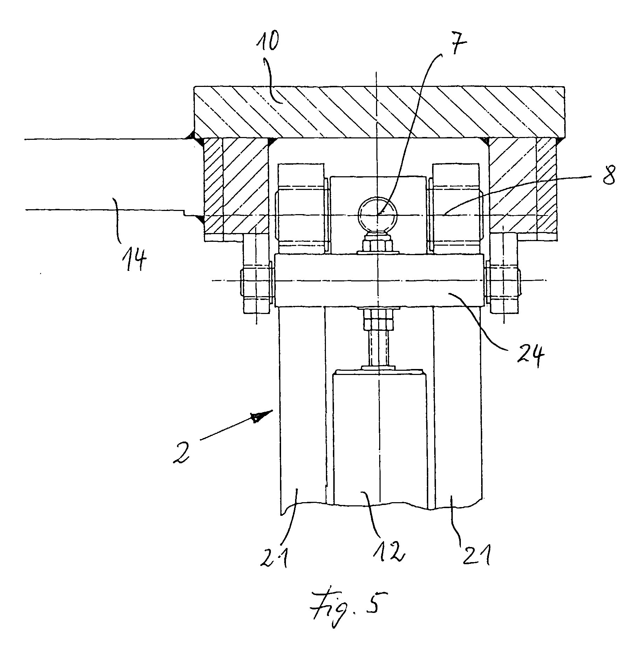

Die Federpakete 12 und 12' werden vorzugsweise in der Mitte zwischen den beiden Bremshebelteilen bzw. in der Ebene der Bremshebel 1 und 2 angeordnet, wie Fig. 2 und 5 zeigen. Durch den symmetrischen Kraftangriff tritt weniger Reibung beim Schließen der Bremse durch die Federpakete auf, weil gegenüber der bekannten Bauform durch den Federangriff kein Moment quer zu den Bremshebeln erzeugt wird.

Fig. 5 zeigt die Anlenkung des Federpakets 12 auf der Seite des Bremshebels 2. Das zwischen den Bremshebelteilen 21 auf der Mittelachse angeordnete Federpaket 12 ist an einem Gelenkbolzen 24 befestigt, dessen Enden in Laschen des Bügels 10 gelagert sind. Der Bügel 10 ist hierbei U-förmig gestaltet, so daß die gesamte Oberseite der Bremse durch den Bügel 10 abgedeckt wird.

Durch die erfindungsgemäße Anordnung der Anlenkachse 9 relativ zu den Gelenkachsen 8 und 11 erhält man neben einer hohen Bremskraft auch einen ausreichend langen Weg der Bremsbacken. Bei einem Gesamthub des elektrohydraulischen Lüftgerätes 13 von 60mm werden etwa 50mm zum Lüften der Bremse verwendet, wobei sich ein Lüftspalt von 1,7mm an jeder Bremsbacke ergibt, insgesamt also 3,4mm Lüftweg. Der Resthub des Lüftgerätes von 10mm wird als Reservehub zum Ausgleich von Änderungen der Bremsbackenstärke und dgl. verwendet.

## Patentansprüche

1. Scheibenbremse mit zwei gegenüberliegenden, Bremsbacken (6) tragenden Bremshebeln (1,2), die an einem Ende verschwenkbar gelagert und am anderen Ende über eine Spindel (7) miteinander verbunden sind, die mit einem Ende am einen Bremshebel (2) und mit dem anderen Ende an einem Bügel (10) angelenkt ist, mit dem der andere Bremshebel (1) in einem Abstand von der Anlenkachse (9) der Spindel (7) gelenkig verbunden ist, wobei der Bügel (10) durch eine Betätigungseinrichtung (12,13) zum Öffnen und Schließen der Bremse verschwenkbar ist,
**dadurch gekennzeichnet,**
daß die Anlenkachse (9) der Spindel (7) am Bügel (10) auf der Außenseite der Gelenkachse (11) zwischen Bügel (10) und Bremshebel (1) angeordnet ist.

2. Scheibenbremse nach Anspruch 1,
wobei die Anlenkachse (9) der Spindel (7) am Bügel (10) unterhalb der Verbindungslinie zwischen den Gelenkachsen ( 8, 11) der Bremshebel (1,2) liegt.

3. Scheibenbremse nach Anspruch 2,
wobei die Verbindungslinie zwischen der Gelenkachse (11) des Bremshebels (1) und der Anlenkachse (9) der Spindel (7) einen Winkel von etwa 4 bis 8° mit der Verbindungslinie zwischen der Gelenkachse ( 8) des einen Bremshebels (2) und der Gelenkachse (11) des mit dem Bügel (10) verbundenen Bremshebels (1) in der Schließstellung der Bremse bildet.

4. Scheibenbremse nach einem der vorhergehenden Ansprüche,
wobei der Bügel (10) die beiden Enden der Bremshebel (1,2) übergreift und wenigstens auf einer Seite mit einem Federpaket (12) gelenkig verbunden ist.

5. Scheibenbremse nach Anspruch 4,
wobei das bzw. die Federpakete (12) im wesentlichen in der Ebene der beiden Bremshebel (1,2) angeordnet ist bzw. sind.

6. Scheibenbremse nach einem der vorhergehenden Ansprüche,
wobei die beiden Bremshebel (1,2) an den unteren Enden über eine Drehkopplung (16) aneinander abgestützt sind.
